(19) Europäisches Patentamt
European Patent Office
Office européen des brevets

(11) **EP 2 940 078 B1**

(12) **EUROPEAN PATENT SPECIFICATION**

(45) Date of publication and mention
of the grant of the patent:
**12.07.2017 Bulletin 2017/28**

(51) Int Cl.:
*C08L 101/00* (2006.01)     *C08K 3/26* (2006.01)
*C08K 5/09* (2006.01)      *C08L 23/00* (2006.01)
*C08L 23/26* (2006.01)      *H01B 3/00* (2006.01)
*H01B 3/44* (2006.01)      *H01B 7/295* (2006.01)

(21) Application number: **13868730.6**

(22) Date of filing: **20.12.2013**

(86) International application number:
**PCT/JP2013/084191**

(87) International publication number:
**WO 2014/103904 (03.07.2014 Gazette 2014/27)**

(54) **FLAME-RETARDANT RESIN COMPOSITION AND CABLE USING SAME**

FLAMMHEMMENDE HARZZUSAMMENSETZUNG UND KABEL DAMIT

COMPOSITION DE RÉSINE IGNIFUGEANTE ET CÂBLE L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2012 JP 2012283913**

(43) Date of publication of application:
**04.11.2015 Bulletin 2015/45**

(73) Proprietor: **Fujikura Ltd.
Tokyo 135-8512 (JP)**

(72) Inventors:
• **IWATA Masayuki
Sakura-shi
Chiba 285-8550 (JP)**

• **WATANABE Tomohisa
Sakura-shi
Chiba 285-8550 (JP)**
• **HOSHINO Kazuya
Suzuka-shi
Mie 510-0226 (JP)**

(74) Representative: **Hoffmann Eitle
Patent- und Rechtsanwälte PartmbB
Arabellastraße 30
81925 München (DE)**

(56) References cited:
**EP-A1- 1 695 997      JP-A- H09 169 918
JP-A- 2007 503 493     JP-A- 2008 532 210
JP-A- 2012 227 101     JP-B1- 5 167 401
JP-B1- 5 167 425      JP-B1- 5 167 428
JP-B1- 5 282 163**

**Description**

TECHNICAL FIELD

The present invention relates to a flame retardant resin composition and a cable using the same.

BACKGROUND ART

In the coating of cables, cable sheaths, tubes, tapes, packaging materials, construction materials and the like, so-called eco-materials are widely used.

As such eco-materials, known is a composition formed by adding calcium carbonate as a flame retardant to a polyolefin resin, and also adding a silicone-based compound such as silicone oil, or magnesium stearate as a flame retardant aid, for example (see Patent Document 1 described below).

CITATION LIST

PATENT DOCUMENT

Patent Document 1: JP 1997-169918 A

SUMMARY OF THE INVENTION

PROBLEM TO BE SOLVED BY THE INVENTION

However, it is difficult to say that flame retardancy has been sufficiently secured with the composition described in Patent Document 1. Here, when the addition amount of the flame retardant is increased, flame retardancy can be enhanced. However, in this case, the abrasion resistance of the composition is deteriorated.

Therefore, there has been a demand for a flame retardant resin composition that can secure excellent flame retardancy while securing excellent abrasion resistance.

The present invention was achieved under such circumstances, and it is an object of the present invention to provide a flame retardant resin composition which can secure excellent flame retardancy while securing excellent abrasion resistance, and a cable using this resin composition.

MEANS FOR SOLVING PROBLEM

In order to solve the problems described above, the inventors of the present invention paid attention particularly to calcium carbonate, which is a flame retardant, and conducted an investigation. As a result, the inventors found that the problems can be solved when the average particle diameter of calcium carbonate is adjusted to a specific range, and calcium carbonate particles, a silicone-based compound, and a fatty acid-containing compound are respectively blended at particular proportions relative to a base resin.

That is, the present invention is a flame retardant resin composition which contains a base resin, calcium carbonate particles which are blended at a proportion of 10 to 150 parts by mass relative to 100 parts by mass of the base resin, a silicone-based compound which is blended at a proportion of 0.5 to 10 parts by mass relative to 100 parts by mass of the base resin, a fatty acid-containing compound which is blended at a proportion of 1 to 20 parts by mass relative to 100 parts by mass of the base resin, wherein the calcium carbonate particles have an average particle diameter of 0.3 $\mu$m or less.

The flame retardant resin composition of the present invention can secure excellent flame retardancy while securing excellent abrasion resistance.

Meanwhile, the inventors of the present invention have the following point of view for the reason why more excellent flame retardancy can be obtained in the flame retardant resin composition of the present invention.

That is, the inventors of the present invention assume that, when calcium carbonate particles, a silicone-based compound, and a fatty acid-containing compound are used, a surface barrier layer is formed at the time of combustion to enhance the flame retardant effect of the resin composition.

Regarding the reason of having excellent abrasion resistance in the aforementioned flame retardant resin composition, it is assumed by the inventors of the present invention as follows.

That is, when calcium carbonate particles with small average particle diameter are used, the calcium carbonate particles are highly dispersed in the resin so that it is difficult to have an occurrence of a starting point for fatigue at an interface of resin-calcium carbonate particles, and as a result, excellent abrasion resistance is obtained.

In the flame retardant resin composition, it is preferable that the calcium carbonate particles be blended at a proportion of 100 parts by mass or less relative to 100 parts by mass of the base resin.

In that case, more excellent abrasion resistance is obtained compared to a case in which calcium carbonate particles are blended at a proportion of more than 100 parts by mass.

In the flame retardant resin composition, it is preferable that the calcium carbonate particles are heavy calcium carbonate or light calcium carbonate, for example.

In the flame retardant resin composition, it is preferable that the base resin be a polyolefin compound.

Furthermore, in the flame retardant resin composition, it is preferable that the polyolefin compound contain an acid modified polyolefin compound.

In that case, more excellent abrasion resistance and flame retardancy are obtained.

In the flame retardant resin composition, it is preferable that the silicone-based compound be silicone gum.

In that case, it is difficult to have an occurrence of blooming.

In the flame retardant resin composition, it is preferable that the fatty acid-containing compound be magnesium stearate.

In that case, more excellent flame retardancy is obtained compared to a case in which the fatty acid-containing compound is not magnesium stearate.

Furthermore, the present invention is a cable which includes an insulated wire which has a conductor and an insulating layer coating the conductor, the insulating layer being formed of the flame retardant resin composition described above.

Furthermore, the present invention is a cable which includes a conductor, an insulating layer coating the conductor, and a sheath covering the insulating layer, at least one of the insulating layer and the sheath being formed of the flame retardant resin composition described above.

Meanwhile, in the present invention, the term "average particle diameter" refers to the average value of R, which is obtained by, when plural calcium carbonate particles are observed by scanning electron microscope (SEM), determining the two-dimensional image area S of each particle, considering S as being equal to the area of a circle and calculating R of each particle based on the following formula:

$$R = 2 \times (S/\pi)^{1/2}.$$

EFFECT OF THE INVENTION

According to the present invention, a flame retardant resin composition which can secure excellent flame retardancy while securing excellent abrasion resistance, and a cable using this resin composition are provided.

BRIEF DESCRIPTION OF DRAWINGS

Fig. 1 is a partial side view illustrating an embodiment of the cable of the present invention; and
Fig. 2 is a cross-section view cut along the line II-II illustrated in Fig. 1.

MODE(S) FOR CARRYING OUT THE INVENTION

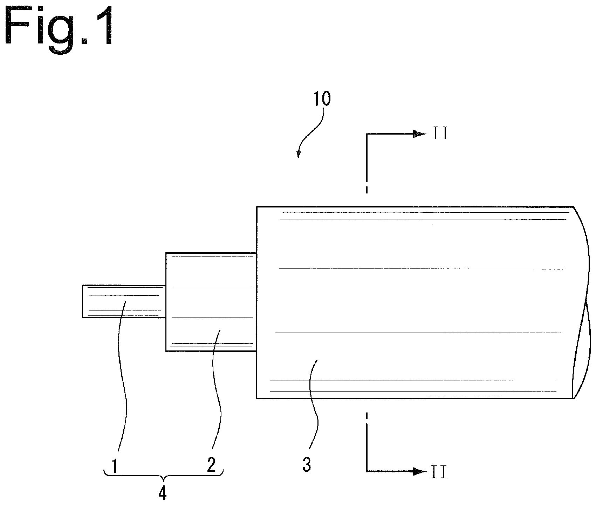

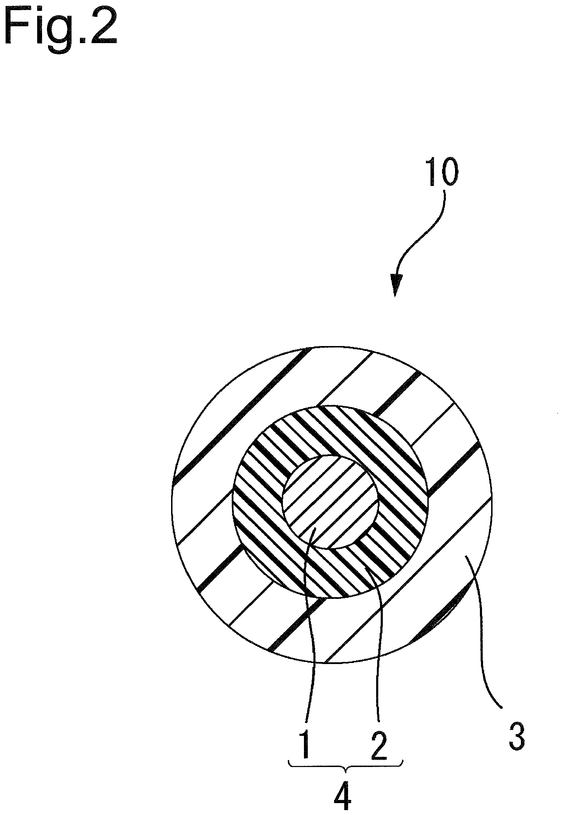

Hereinafter, embodiments of the present invention will be described in detail using Fig. 1 and Fig. 2.

[Cable]

Fig. 1 is a partial side view illustrating an embodiment of the cable according to the present invention, and it illustrates a circular cable. Fig. 2 is a cross-sectional view cut along the II-II line illustrated in Fig. 1. As illustrated in Fig. 1 and Fig. 2, a circular cable 10 includes an insulated wire 4, and a sheath 3 that coats the insulated wire 4. The insulated wire 4 has an internal conductor 1 and an insulating layer 2 that coats the internal conductor 1.

Herein, the insulating layer 2 and sheath 3 are formed of a flame retardant resin composition, and this flame retardant resin composition includes a base resin, calcium carbonate particles that are blended at a proportion of 10 to 150 parts by mass relative to 100 parts by mass of the base resin, a silicone-based compound that is blended at a proportion of 0.5 to 10 parts by mass relative to 100 parts by mass of the base resin, and a fatty acid-containing compound that is blended at a proportion of 1 to 20 parts by mass relative to 100 parts by mass of the base resin. Herein, the average particle diameter of the calcium carbonate particles is less than 0.7 $\mu$m.

With the insulating layer 2 and sheath 3 that are formed of the aforementioned flame retardant resin composition, it is possible to secure excellent flame retardancy while securing excellent abrasion resistance.

[Method for producing cable]

Next, a method for producing the aforementioned circular cable 10 will be described.

(Internal Conductor)

First, the internal conductor 1 is prepared. The internal conductor 1 may be composed of a single strand, or may be composed of plural strands bundled together. Furthermore, the internal conductor 1 is not particularly limited in terms of the diameter of the conductor, the material of the conductor and the like, and it can be appropriately selected in accordance with the use.

(Flame retardant resin composition)

Meanwhile, the flame retardant resin composition is prepared. As described above, the flame retardant resin composition includes a base resin, calcium carbonate particles that are blended at a proportion of 10 to 150 parts by mass relative to 100 parts by mass of the base resin, a silicone-based compound that is blended at a proportion of 0.5 to 10 parts by mass relative to 100 parts by mass of the base resin, and a fatty acid-containing compound that is included at a proportion of 1 to 20 parts by mass relative to 100 parts by mass of the base resin.

(Base resin)

Examples of the base resin include a polyolefin compound such as polyethylene (PE) or polypropylene (PP), an ethylene-ethyl acrylate copolymer (EEA), an ethylene methyl acrylate copolymer (EMA), a styrene butylene rubber (SBR), a polyester-based elastomer, a polyamide-based elastomer, and a polyurethane-based elastomer. Among them, the polyolefin compound is preferable. It is more preferable that the polyolefin compound additionally contain an acid modified polyolefin compound. In that case, the flame retardant resin composition can secure more excellent abrasion resistance and flame retardancy. Examples of the acid modified polyolefin compound include a maleic anhydride modified polyethylene, a maleic anhydride polypropylene, a maleic anhydride modified ethylene-$\alpha$ olefin copolymer, a maleic anhydride modified styrene-based elastomer, and a maleic anhydride modified ethylenepropylene copolymer.

(Calcium carbonate particles)

The calcium carbonate particles may be any of heavy calcium carbonate or light calcium carbonate. Among them, from the viewpoint of being easily available and low price, heavy calcium carbonate is preferred.

The average particle diameter of the calcium carbonate particles is less than 0.7 $\mu$m. If the average particle diameter of the calcium carbonate particles is 0.7 $\mu$m or more, the flame retardant resin composition cannot secure sufficient abrasion resistance. The average particle diameter of the calcium carbonate particles is 0.3 $\mu$m or less, and preferably 0.1 $\mu$m or less.

Meanwhile, the average particle diameter of the calcium carbonate particles is preferably 0.01 $\mu$m or more. In that case, the flame retardant resin composition can secure more excellent flame retardancy.

The calcium carbonate particles are blended at a proportion of 10 to 150 parts by mass relative to 100 parts by mass of the base resin. When the blending ratio of the calcium carbonate particles is less than 10 parts by mass, the flame retardant resin composition cannot secure sufficient flame retardancy. Furthermore, when the blending ratio of the calcium carbonate particles is more than 150 parts by mass, the flame retardant resin composition cannot secure sufficient abrasion resistance.

It is also preferable that the calcium carbonate particles be blended at a proportion of 100 parts by mass or less. In that case, the flame retardant resin composition can secure more excellent abrasion resistance compared to a case in which the blending ratio of the calcium carbonate particles is higher than 100 parts by mass. The blending ratio of the calcium carbonate particles is more preferably 10 to 80 parts by mass, and even more preferably 30 to 60 parts by mass.

(Silicone-based compound)

The silicone-based compound is a compound which functions as a flame retardant aid. Examples of the silicone-based compound include polyorganosiloxanes. Here, the polyorganosiloxanes are compounds which have siloxane bonds in the main chain, and have organic groups in side chains. Examples of the organic groups include a methyl group, a vinyl group, an ethyl group, a propyl group, and a phenyl group. Specific examples of the polyorganosiloxanes include dimethylpolysiloxane, methylethylpolysiloxane, methyloctylpolysiloxane, methylvinylpolysiloxane, methylphenylpolysiloxane, and methyl-(3,3,3-trifluoropropyl)polysiloxane. The polyorganosiloxane is used in the form of silicone powder, silicone gum, silicone oil, or silicone resin. Among them, it is preferable that the polyorganosiloxane be used in the form of silicone gum. In that case, blooming does not easily occur.

The silicone-based compound is blended at a proportion of 0.5 to 10 parts by mass relative to 100 parts by mass of the base resin as described above. When the blending ratio of the silicone-based compound is less than 0.5 parts by mass, the flame retardant resin composition cannot secure sufficient flame retardancy. Furthermore, when the blending ratio of the silicone-based compound is more than 10 parts by mass, the flame retardant resin composition cannot secure sufficient abrasion resistance. The blending ratio of the silicone-based compound is more preferably 1 to 7 parts by mass, and even more preferably 3 to 5 parts by mass.

The silicone-based compound may be attached in advance to the surface of the calcium carbonate particles. In that case, it is preferable that the entirety of each of the calcium carbonate particles included in the flame retardant resin composition be coated with the silicone-based compound. In that case, since the calcium carbonate particles can be easily dispersed in the base resin, uniformity of the characteristics of the flame retardant resin composition is further enhanced.

Examples of the method of attaching the silicone-based compound to the surface of calcium carbonate include, for example, a method in which the silicone-based compound is added to the calcium carbonate particles, they are mixed to obtain a mixture, the mixure is then subsequently dried at 40°C to 75°C for 10 minutes to 40 minutes, and the dried mixture is pulverized using a Henschel mixer, an atomizer or the like.

(Fatty acid-containing compound)

The fatty acid-containing compound is a compound which functions as a flame retardant aid. The fatty acid-containing compound refers to a compound containing a fatty acid or a metal salt thereof. Here, as the fatty acid, a fatty acid having 12 to 28 carbon atoms is used. Examples of such a fatty acid include lauric acid, myristic acid, palmitic acid, stearic acid, tuberculostearic acid, oleic acid, linoleic acid, arachidonic acid, behenic acid, and montanic acid. Among them, the fatty acid is preferably stearic acid or tuberculostearic acid. Stearic acid is particularly preferred. In that case, more excellent flame retardancy is obtained as compared to the case in which a fatty acid other than stearic acid or tuberculostearic acid is used.

Examples of the metal that constitutes a metal salt of the fatty acid include magnesium, calcium, zinc and lead. The metal salt of the fatty acid is preferably magnesium stearate. In that case, more excellent flame retardancy is obtained as compared to the case in which a fatty acid metal salt other than magnesium stearate is used.

The fatty acid-containing compound is blended at a proportion of 1 to 20 parts by mass relative to 100 parts by mass of the base resin as described above. When the blending ratio of the fatty acid-containing compound is less than 1 part by mass, the flame retardant resin composition cannot secure sufficient flame retardancy. Furthermore, when the blending ratio of the fatty acid-containing compound is more than 20 parts by mass, the flame retardant resin composition cannot secure sufficient abrasion resistance. The blending ratio of the fatty acid-containing compound is more preferably 2 to 15 parts by mass, and even more preferably 3 to 10 parts by mass.

The flame retardant resin composition may further include an oxidation inhibitor, an ultraviolet-induced deterioration inhibitor, a processing aid, a coloring pigment, a lubricating agent, and a filler such as carbon black as necessary.

The flame retardant resin composition can be obtained by kneading a base resin, calcium carbonate, a silicone-based compound, a fatty acid-containing compound, and the like. Kneading can be carried out using, for example, a kneading machine such as a Banbury mixer, a tumbler, a pressurized kneader, a kneader extruder, a twin screw extruder, or a mixing roll. At this time, from the viewpoint of improving the dispersion property of the silicone-based compound, a master batch (MB) obtained by kneading a portion of the base resin and the silicone-based compound may be kneaded with the remaining base resin, calcium carbonate particles, the fatty acid-containing compound, and the like.

Next, the internal conductor 1 is coated with the flame retardant resin composition. Specifically, the flame retardant resin composition described above is melt kneaded using an extruder, and a tube-shaped extrusion product is formed. Then, this tube-shaped extrusion product is continuously coated on the internal conductor 1. Thus, the insulated wire 4 is obtained.

(Sheath)

Finally, the insulated wire 4 obtained as described above is prepared, and the insulated wire 4 is coated with the sheath 3 which has been produced using the flame retardant resin composition described above. The sheath 3 protects the insulating layer 2 from physical or chemical damage.

In this manner, a circular cable 10 is obtained.

The present invention is not intended to be limited to the embodiment described above. For example, in the above embodiment, the circular cable 10 has one insulated wire 4; however, the cable of the present invention is not limited to a circular cable, and the cable may have two or more insulated wires 4 on the inner side of the sheath 3. Furthermore, a resin section formed of polypropylene or the like may also be provided between the sheath 3 and the insulated wire 4. In addition, the cable of the present invention may further have an external conductor between the sheath 3 and the insulated wire 4, as in the case of a coaxial cable.

Furthermore, in the above embodiment, the insulating layer 2 and the sheath 3 of the insulated wire 4 are formed of the flame retardant resin composition, but it is also possible that the insulating layer 2 is formed of a conventional insulating resin, and only the sheath 3 is formed of the flame retardant resin composition that constitutes the insulating layer 2. Conversely, it is also possible that the sheath 3 is formed of a conventional insulating resin, and only the insulating layer 2 is formed of the flame retardant resin composition.

Furthermore, in the above embodiment, the cable has a sheath; however, the cable may not have a sheath. That is, the cable may be composed only of the insulated wire.

Furthermore, in the above embodiment, the flame retardant resin composition of the present invention is used as a material that constitutes an insulating layer and a sheath of a cable, but the flame retardant resin composition of the present invention can also be used in tubes, tapes, packaging materials, construction materials, and the like.

EXAMPLES

Hereinafter, the contents of the present invention will be more specifically described by way of Examples and Comparative Examples, but this invention is not intended to be limited to the following Examples.

(Examples 1 to 18 and Comparative Examples 1 to 9)

A base resin, a compound including the silicone-based compound, a fatty acid-containing compound, and calcium carbonate particles were blended in the blending amounts indicated in Tables 1 to 6, and they were kneaded for 15 minutes at 160°C by a Banbury mixer. Thus, a flame retardant resin composition was obtained. Meanwhile, in Tables 1 to 6, the unit of the blending amount of the various blended components is parts by mass. Furthermore, in Tables 1 to 6, the total blending amount indicated in the "base resin" column was not 100 parts by mass except Examples 16 and 17. However, the silicone MB also included the base resins, and the sum of the blending amount in the "base resin" column and the blending amount of the base resin in the silicone MB was 100 parts by mass. Furthermore, the description of "3/2" for the blending amount of the silicone powder (silicone/silica) in Example 16 means the blending of 3 parts by mass of silicone and 2 parts by mass of silica.

As the base resin, silicone MB, calcium carbonate particles, and fatty acid-containing compound, specifically those described below were used.

(1) Base resin

(1-A) PP

Prime Polypro E-111G (trade name, manufactured by Prime Polymer Co., Ltd.)

(1-B) PE

EXCELLEN GMH GH030 (trade name, PE manufactured by Sumitomo Chemical Company, Limited)

(1-C) Acid modified PO

Maleic anhydride modified ethylene-$\alpha$ olefin copolymer TAFMER MA8510 (trade name, manufactured by Mitsui Chemicals, Incorporated)

(1-D) Polyester elastomer

Hytrel 5577 (trade name, manufactured by DU PONT-TORAY CO., LTD.)

(2) Compound including silicone-based compound

(2-A) Silicone master batch (Silicone MB)

X-22-2101 (trade name, manufactured by Shin-Etsu Chemical Co., Ltd.)
Containing 50% by mass of a silicone gum
(dimethylpolysiloxane) and 50% by mass of PP

(2-B) Silicone MB

X-22-2125H (trade name, manufactured by Shin-Etsu Chemical Co., Ltd.)
Containing 50% by mass of a silicone gum
(dimethylpolysiloxane) and 50% by mass of PE

(2-C) Silicone MB

X-22-2147 (trade name, manufactured by Shin-Etsu Chemical Co., Ltd.)
Containing 50% by mass of a silicone gum
(methylphenylpolysiloxane) and 50% by mass of PE

(2-D) Silicone powder

DC4-7081 (trade name, manufactured by Dow Corning Toray Silicone Co., Ltd.)
Powder in which polydimethylsiloxane is supported on silica (Content of polydimethyl siloxane in powder: 60% by mass, and content of silica in powder: 40% by mass)

(2-E) Silicone oil

KF-96 (trade name, manufactured by Shin-Etsu Chemical Co., Ltd.)

(3) Fatty acid-containing compound

(3-A) Magnesium stearate

AFCO CHEM MGS (trade name, manufactured by ADEKA CORPORATION)

(3-B) Calcium stearate

SC-P (trade name, manufactured by Sakai Chemical Industry Co., Ltd.)

(4) Calcium carbonate particles

(4-A) Calcium carbonate particles (average particle diameter of 0.02 $\mu$m)

ACTIFORT 700 (trade name, manufactured by Shiraishi Calcium Kaisha, Ltd.)

(4-B) Calcium carbonate particles (average particle diameter of 0.08 $\mu$m)

Hakuenka CCR (trade name, manufactured by Shiraishi Calcium Kaisha, Ltd.)

(4-C) Calcium carbonate particles (average particle diameter of 0.3 $\mu$m)

TunexE (trade name, manufactured by Shiraishi Calcium Kaisha, Ltd.)

(4-D) Calcium carbonate particles (average particle diameter of 0.7 $\mu$m)

Softon 3200 (trade name, manufactured by Shiraishi Calcium Kaisha, Ltd.)
Subsequently, the flame retardant resin composition obtained as described above was kneaded for 15 minutes at 160°C by using a Banbury mixer. Thereafter, this flame retardant resin composition was fed into a single screw extruder (L/D = 20, screw type: full flight screw, manufactured by Marth Seiki Co., Ltd.), and a tube-shaped extrusion product was extruded from the extruder and coated on a conductor (number of strands: one/cross-sectional area: 0.22 mm$^2$) to have a thickness of 0.25 mm. Thus, an insulated wire was obtained.

[Table 1]

| | | | Example 1 | Example 2 | Example 3 | Example 4 |
|---|---|---|---|---|---|---|
| Resin composition | PP | | 57 | 57 | 57 | 57 |
| | PE | | 40 | 40 | 40 | 40 |
| | Acid modified PO | | | | | |
| | Silicone MB (PP/silicone gum (dimethylpolysiloxane)) | | 3/3 | 3/3 | 3/3 | 3/3 |
| | Silicone MB (PE/silicone gum (dimethylpolysiloxane)) | | | | | |
| | Fatty acid-containing compound | Mg stearate | 5 | 5 | 5 | 5 |
| | Calcium carbonate particles (average particle diameter of 0.08 $\mu$m) | | 10 | 50 | 100 | 150 |
| Abrasion resistance | | Number of abrasions (number) | 312 | 251 | 196 | 106 |
| Flame retardancy | | Self-extinguishment | ○ | ○ | ○ | ○ |
| | | Fire extinguishing time (seconds) | 34 | 27 | 22 | 16 |

[Table 2]

| | | | Example 5 | Example 6 | Example 7 | Example 8 |
|---|---|---|---|---|---|---|
| Resin composition | PP | | 57 | 77 | | |
| | PE | | 30 | 20 | 97 | 87 |
| | Acid modified PO | | 10 | | | 10 |
| | Silicone MB (PP/silicone gum (dimethylpolysiloxane)) | | 3/3 | 3/3 | | |
| | Silicone MB (PE/silicone gum (dimethylpolysiloxane)) | | | | 3/3 | 3/3 |
| | Fatty acid-containing compound | Mg stearate | 5 | 5 | 5 | 5 |
| | Calcium carbonate particles (average particle diameter of 0.08 $\mu$m) | | 50 | 50 | 50 | 50 |

(continued)

|  |  | Example 5 | Example 6 | Example 7 | Example 8 |
|---|---|---|---|---|---|
| Abrasion resistance | Number of abrasions (number) | 365 | 456 | 215 | 256 |
| Flame retardancy | Self-extinguishment | ○ | ○ | ○ | ○ |
|  | Fire extinguishing time (seconds) | 22 | 25 | 30 | 26 |

[Table 3]

|  |  |  | Example 9 | Example 10 | Example 11 | Example 12 | Example 13 |
|---|---|---|---|---|---|---|---|
| Resin composition | PP |  | 57 | 57 | 50 | 59.5 | 57 |
|  | PE |  | 40 | 40 | 40 | 40 | 40 |
|  | Acid modified PO |  |  |  |  |  |  |
|  | Polyester-based elastomer |  |  |  |  |  |  |
|  | Silicone MB (PP/silicone gum (dimethylpolysiloxane)) |  | 3/3 | 3/3 | 10/10 | 0.5/0.5 |  |
|  | Silicone MB (PE/silicone gum (dimethylpolysiloxane)) |  |  |  |  |  | 3/3 |
|  | Fatty acid-containing compound | Mg stearate | 5 | 5 | 5 | 5 | 1 |
|  |  | Ca stearate |  |  |  |  |  |
|  | Calcium carbonate particles (average particle diameter of 0.02 $\mu$m) |  | 50 |  |  |  |  |
|  | Calcium carbonate particles (average particle diameter of 0.08 $\mu$m) |  |  |  | 50 | 50 | 50 |
|  | Calcium carbonate particles (average particle diameter of 0.3 $\mu$m) |  |  | 50 |  |  |  |
| Abrasion resistance | Number of abrasions (number) |  | 301 | 187 | 123 | 233 | 289 |
| Flame retardancy | Self-extinguishment |  | ○ | ○ | ○ | ○ | ○ |
|  | Fire extinguishing time (seconds) |  | 46 | 23 | 22 | 34 | 45 |

[Table 4]

| | | | Example 14 | Example 15 | Example 16 | Example 17 | Example 18 |
|---|---|---|---|---|---|---|---|
| Resin composition | | PP | 57 | | 60 | 60 | 57 |
| | | PE | 40 | | 40 | 40 | 40 |
| | | Acid modified PO | | | | | |
| | | Polyester-based elastomer | | 97 | | | |
| | | Silicone MB (PP/silicone gum (dimethylpolysiloxane)) | | | | | 3/3 |
| | | Silicone MB (PE/silicone gum (dimethylpolysiloxane)) | 3/3 | | | | |
| | | Silicone MB (PE/silicone gum (methylphenylpolysiloxane)) | | 3/3 | | | |
| | | Silicone powder (silicone/silica) | | | 3/2 | | |
| | | Silicone oil | | | | 3 | |
| | Fatty acid-containing compound | Mg stearate | 20 | 5 | 5 | 5 | |
| | | Ca stearate | | | | | 5 |
| | | Calcium carbonate particles (average particle diameter of 0.02 $\mu$m) | | | | | |
| | | Calcium carbonate particles (average particle diameter of 0.08 $\mu$m) | 50 | 20 | 50 | 50 | 50 |
| | | Calcium carbonate particles (average particle diameter of 0.3 $\mu$m) | | | | | |
| Abrasion resistance | | Number of abrasions (number) | 117 | 468 | 267 | 243 | 298 |
| Flame retardancy | | Self-extinguishment | ○ | ○ | ○ | ○ | ○ |
| | | Fire extinguishing time (seconds) | 17 | 27 | 26 | 26 | 37 |

[Table 5]

| | | Comparative Example 1 | Comparative Example 2 | Comparative Example 3 | Comparative Example 4 | Comparative Example 5 |
|---|---|---|---|---|---|---|
| Resin composition | PP | 57 | 57 | 57 | 40 | 59.7 |
| | PE | 40 | 40 | 40 | 40 | 40 |
| | Acid modified PO | | | | | |
| | Silicone MB (PP/silicone gum (dimethylpolysiloxane)) | 3/3 | 3/3 | 3/3 | 20/20 | 0.3/0.3 |
| | Silicone MB (PE/silicone gum (dimethylpolysiloxane)) | | | | | |
| | Fatty acid-containing compound — Mg stearate | 5 | 5 | 5 | 5 | 5 |
| | Calcium carbonate particles (average particle diameter of 0.08 μm) | | | | 50 | 50 |
| | Calcium carbonate particles (average particle diameter of 0.3 μm) | | | | | |
| | Calcium carbonate particles (average particle diameter of 0.7 μm) | 10 | 50 | 150 | | |
| Abrasion resistance | Number of abrasions (number) | 96 | 75 | 32 | 91 | 210 |
| Flame retardancy | Self-extinguishment | ○ | ○ | ○ | ○ | × |
| | Fire extinguishing time (seconds) | 23 | 18 | 15 | 25 | - |

[Table 6]

| | | Comparative Example 6 | Comparative Example 7 | Comparative Example 8 | Comparative Example 9 |
|---|---|---|---|---|---|
| Resin composition | PP | 57 | 57 | 57 | 57 |
| | PE | 40 | 40 | 40 | 40 |
| | Acid modified PO | | | | |
| | Silicone MB (PP/silicone gum (dimethylpolysiloxane)) | 3/3 | 3/3 | 3/3 | 3/3 |
| | Silicone MB (PE/silicone gum (dimethylpolysiloxane)) | | | | |
| | Fatty acid-containing compound — Mg stearate Mg | 0.5 | 30 | 5 | 5 |
| | Calcium carbonate particles (average particle diameter of 0.08 µm) | 50 | 50 | | 200 |
| | Calcium carbonate particles (average particle diameter of 0.3 µm) | | | | |
| | Calcium carbonate particles (average particle diameter of 0.7 µm) | | | | |
| Abrasion resistance | Number of abrasions (number) | 291 | 87 | 325 | 21 |
| Flame retardancy | Self-extinguishment | × | ○ | × | ○ |
| | Fire extinguishing time (seconds) | - | 23 | - | 16 |

For the insulated wires of Example 1 to 18 and Comparative Examples 1 to 9 obtained as described above, evaluations of flame retardancy and abrasion resistance were performed as described below.

<Flame retardancy>

(45 Degree tilt combustion test)

The evaluation of flame retardancy for the insulated wires of Example 1 to 18 and Comparative Examples 1 to 9 was performed in the following order based on a 45 degree tilt combustion test (ISO 6722).

That is, the insulated wire was first cut to 600 mm to obtain a sample, and this sample was then fixed in a state tilted at an angle of 45° relative to a horizontal surface. Next, the bottom part of the sample was brought into contact with flame of a burner with pre-determined size for 15 seconds. However, when the conductor of the insulated wire was exposed during contact with fire, the burner flame was removed from the sample at that moment and the contact with flame was terminated. Then, the time period from the termination of contact with flame to self-extinguishment of the sample was measured. Results of the 45 degree tilt combustion test are shown in Tables 1 to 6. In Table 1 to 6, those exhibiting self-extinguishment within 70 seconds from the termination of contact with fire and maintaining at least 50 mm of the top part of the sample were determined to be acceptable and described as "O" in the column of "self-extinguishment" in Tables 1 to 6. Furthermore, the time (seconds) required until the self-extinguishment was described in the column of "fire extinguishing time (seconds)" of Tables 1 to 6. Furthermore, those not exhibiting self-extinguishment within 70 seconds from the termination of contact with fire or not maintaining at least 50 mm of the top part of the sample were determined to be non-acceptable and described as "×" in the column of "self-extinguishment" and also "-" in the column of "fire extinguishing time (seconds)" in Tables 1 to 6.

<Abrasion resistance>

The evaluation of abrasion resistance for the insulated wires of Examples 1 to 18 and Comparative Examples 1 to 9 was performed in the following order based on a scrape test (JASO D611). That is, the insulated wire of Examples 1 to 18 and Comparative Examples 1 to 9 was cut to 1 m, and, while a needle having $\phi$ of 0.45 mm was very closely pressed against the surface of the insulated wire with a load of 7 N, reciprocal abrasion of the surface of the insulated wire was performed. The number of reciprocating movement of the needle until the needle is in contact with the conductor within the insulated wire was measured. After moving the insulated wire from the needle, it was rotated at 90° with its longitudinal direction as a center axis, and the number of reciprocating movement was also measured in the same manner as described above at the position which is opposite to the needle at that time. This operation was repeated 12 times, and the minimum value of the number of reciprocating movement was determined as "number of abrasions" for each insulated wire. The number of abrasions (number) for the insulated wire of Examples 1 to 18 and Comparative Examples 1 to 9 was indicated in Tables 1 to 6. In the scrape test described above, those with number of abrasions of 100 or more were determined to be acceptable while those with number of abrasions of less than 100 were determined to be non-acceptable.

From the results shown in Tables 1 to 6, it was found that the insulated wires of Examples 1 to 18 met the acceptance criteria regarding flame retardancy and abrasion resistance. In contrast, the insulated wires of Comparative Examples 1 to 9 did not meet the acceptance criteria regarding flame retardancy and abrasion resistance.

Accordingly, it was confirmed that the flame retardant resin composition of the present invention can secure excellent flame retardancy while securing excellent abrasion resistance.

EXPLANATIONS OF REFERRENCE NUMERALS

1    INTERNAL CONDUCTOR
2    INSULATING LAYER
3    SHEATH
4    INSULATED WIRE
10    CIRCULAR CABLE

**Claims**

1.   A flame retardant resin composition comprising:

a base resin;

calcium carbonate particles which are blended at a proportion of 10 to 150 parts by mass relative to 100 parts by mass of the base resin;

a silicone-based compound which is blended at a proportion of 0.5 to 10 parts by mass relative to 100 parts by mass of the base resin; and

a fatty acid-containing compound which is blended at a proportion of 1 to 20 parts by mass relative to 100 parts by mass of the base resin,

wherein the calcium carbonate particles have an average particle diameter of 0.3 $\mu$m or less.

2. The flame retardant resin composition according to claim 1, wherein the calcium carbonate particles are blended at a proportion of 100 parts by mass or less relative to 100 parts by mass of the base resin.

3. The flame retardant resin composition according to claim 1 or 2, wherein the calcium carbonate particles are heavy calcium carbonate or light calcium carbonate.

4. The flame retardant resin composition according to any one of claims 1 to 3, wherein the base resin is a polyolefin compound.

5. The flame retardant resin composition according to claim 4, wherein the polyolefin compound contains an acid modified polyolefin compound.

6. The flame retardant resin composition according to any one of claims 1 to 5, wherein the silicone-based compound is a silicone gum.

7. The flame retardant resin composition according to any one of claims 1 to 6, wherein the fatty acid-containing compound is magnesium stearate.

8. A cable comprising an insulated wire which has a conductor and an insulating layer coating the conductor, the insulating layer being formed of the flame retardant resin composition according to any one of claims 1 to 7.

9. A cable comprising a conductor, an insulating layer coating the conductor, and a sheath covering the insulating layer, at least one of the insulating layer and the sheath being formed of the flame retardant resin composition according to any one of claims 1 to 7.

**Patentansprüche**

1. Flammwidrige Harzzusammensetzung, umfassend:

ein Basisharz;

Calciumcarbonatpartikel, die zu einem Anteil von 10 bis 150 Masseteile relativ zu 100 Masseteilen des Basisharzes beigemengt werden;

eine Silikon-basierte Verbindung, die zu einem Anteil von 0,5 bis 10 Masseteile relativ zu 100 Masseteilen des Basisharzes beigemengt wird; und

eine Fettsäure-haltige Verbindung, die zu einem Anteil von 1 bis 20 Masseteile relativ zu 100 Masseteilen des Basisharzes beigemengt wird,

wobei die Calciumcarbonatpartikel einen durchschnittlichen Partikeldurchmesser von 0,3 $\mu$m oder weniger aufweisen.

2. Flammwidrige Harzzusammensetzung gemäß Anspruch 1, wobei die Calciumcarbonatpartikel zu einem Anteil von 100 Masseteilen oder weniger relativ zu 100 Masseteilen des Basisharzes beigemengt werden.

3. Flammwidrige Harzzusammensetzung gemäß Anspruch 1 oder 2, wobei die Calciumcarbonatpartikel schweres Calciumcarbonat oder leichtes Calciumcarbonat sind.

4. Flammwidrige Harzzusammensetzung gemäß irgendeinem der Ansprüche 1 bis 3, wobei das Basisharz eine Polyolefinverbindung ist.

**5.** Flammwidrige Harzzusammensetzung gemäß Anspruch 4, wobei die Polyolefinverbindung eine säuremodifizierte Polyolefinverbindung enthält.

**6.** Flammwidrige Harzzusammensetzung gemäß irgendeinem der Ansprüche 1 bis 5, wobei die Silikon-basierte Verbindung ein Silikongummi ist.

**7.** Flammwidrige Harzzusammensetzung gemäß irgendeinem der Ansprüche 1 bis 6, wobei die Fettsäure-haltige Verbindung Magnesiumstearat ist.

**8.** Kabel, umfassend einen Isolierdraht, der einen Leiter und eine Isolierschicht, die den Leiter beschichtet, aufweist, wobei die Isolierschicht aus der flammwidrigen Harzzusammensetzung gemäß irgendeinem der Ansprüche 1 bis 7 gebildet ist.

**9.** Kabel, umfassend einen Leiter, eine Isolierschicht, die den Leiter beschichtet, und eine Ummantelung, die die Isolierschicht bedeckt, wobei mindestens eines von der Isolierschicht und der Ummantelung aus der flammwidrigen Harzzusammensetzung gemäß irgendeinem der Ansprüche 1 bis 7 gebildet ist.

**Revendications**

**1.** Composition de résine ignifuge comprenant :

une résine de base ;
des particules de carbonate de calcium qui sont mélangées dans une proportion de 10 à 150 parties en masse par rapport à 100 parties en masse de la résine de base ;
un composé à base de silicone qui est mélangé dans une proportion de 0,5 à 10 parties en masse par rapport à 100 parties en masse de la résine de base ; et
un composé contenant un acide gras qui est mélangé dans une proportion de 1 à 20 parties en masse par rapport à 100 parties en masse de la résine de base,
dans laquelle les particules de carbonate de calcium ont un diamètre de particule moyen de 0,3 pm ou inférieur.

**2.** Composition de résine ignifuge selon la revendication 1, dans laquelle les particules de carbonate de calcium sont mélangées dans une proportion de 100 parties en masse ou inférieure par rapport à 100 parties en masse de la résine de base.

**3.** Composition de résine ignifuge selon la revendication 1 ou 2, dans laquelle les particules de carbonate de calcium sont du carbonate de calcium lourd ou du carbonate de calcium léger.

**4.** Composition de résine ignifuge selon l'une des revendications 1 à 3, dans laquelle la résine de base est un composé de polyoléfine.

**5.** Composition de résine ignifuge selon la revendication 4, dans laquelle le composé de polyoléfine contient un composé de polyoléfine modifié par un acide.

**6.** Composition de résine ignifuge selon l'une quelconque des revendications 1 à 5, dans laquelle le composé à base de silicone est une gomme de silicone.

**7.** Composition de résine ignifuge selon l'une quelconque des revendications 1 à 6, dans laquelle le composé contenant un acide gras est le stéarate de magnésium.

**8.** Câble comprenant un fil isolé qui a un conducteur et une couche isolante revêtant le conducteur, la couche isolante étant formée de la composition de résine ignifuge selon l'une quelconque des revendications 1 à 7.

**9.** Câble comprenant un conducteur, une couche isolante revêtant le conducteur et une gaine recouvrant la couche isolante, au moins soit la couche isolante soit la gaine étant formée par la composition de résine ignifuge selon l'une quelconque des revendications 1 à 7.

# Fig.1

# Fig.2

**EP 2 940 078 B1**

## REFERENCES CITED IN THE DESCRIPTION

**Patent documents cited in the description**

- JP 9169918 A